# EUROPÄISCHE PATENTSCHRIFT

(11) **EP 1 601 897 B1**
(45) Veröffentlichungstag und Bekanntmachung des Hinweises auf die Patenterteilung: **30.08.2006**
(21) Anmeldenummer: 04707893.6
(22) Anmeldetag: 04.02.2004
(51) Int. Cl.: F16K 11/074, B01D 61/10, B01D 61/06

(54) **ARMATUR**
FITTING
APPAREIL DE ROBINETTERIE

(30) Priorität: 12.03.2003 DE 10310662
(43) Veröffentlichungstag der Anmeldung: 07.12.2005
(73) Patentinhaber: KSB Aktiengesellschaft, 67227 Frankenthal (DE)
(72) Erfinder: BAUMGARTEN, Sven, 67251 Freinsheim (DE); BROSS, Stephan, 67167 Erpolzheim (DE); BRECHT, Bernhard, 67433 Neustadt/Weinstrasse (DE); BRUHNS, Uwe, 67574 Osthofen (DE); ELLEGAARD, Mogens, 2670 Greve (DK); FLAK, Stefan, 67227 Frankenthal (DE); JÄGER, Christoph, 67229 Gerolsheim (DE); KOCHANOWSKI, Wolfgang, 55452 Windesheim (DE); KNÖBL, Wiltrud, 67071 Ludwigshafen (DE)
(86) Internationale Anmeldenummer: PCT/EP2004/000987
(87) Internationale Veröffentlichungsnummer: WO 2004/081431

(56) Entgegenhaltungen:
- GB-A- 761 690
- US-A- 2 079 743
- US-A- 2 677 391
- US-A- 2 797 707
- US-A- 3 752 167
- US-A- 4 705 627
- US-A- 5 306 428

## Beschreibung

Die Erfindung betrifft eine Armatur, insbesondere für Anlagen mit Drucktauschern mit wechselweise durchströmten Rohrkammern, wobei innerhalb eines Gehäuses der Armatur ein drehbares Verschlusselement angeordnet ist, das Gehäuse mehrere Anschlüsse für Verbindungsleitungen aufweist, das Gehäuse mit einem ersten Rohrleitungssystem und mit jeweils einer Endseite von mindestens einem Drucktauscher verbunden ist, wobei eine jeweils andere Endseite eines Drucktauschers unter Zwischenschaltung weiterer Armaturen mit einem zweiten Rohrleitungssystem verbunden ist, und das Verschlusselement mit einer motorbetriebenen Antriebswelle versehen ist.

Zur Aufbereitung von Wasser wird häufig das Verfahren der Umkehr-Osmose benutzt. Dabei wird ein zu reinigender Flüssigkeitsstrom mit hohem Druck durch ein Membransystem gedrückt, welches bei großen Flüssigkeitsmengen aus einer Vielzahl von Membranmodulen besteht. In solchen Membranmodulen erfolgt durch eine Membran eine Trennung in Reinwasser und in ein angereichertes Konzentrat, da immer nur ein Teil einer zu reinigenden Flüssigkeit eine Membran durchströmen kann. Der durchströmende Anteil tritt als Reinwasser oder auch Permeat auf der anderen Membranseite als nutzbarer Anteil aus. Der nicht durchströmende Teil verläßt als Brine, ein mit Salzen und Mineralien angereichertes Konzentrat der Flüssigkeit, als ein nicht nutzbarer und unter hohem Druck stehender Anteil ein Membranmodul. Dieser Druck liegt ca. 2 bar unter einem Modul-Eingangsdruck von ca. 65 bar.

Durch die US 5 306 428 ist eine Reverse-Osmose-Anlage bekannt, in der zur Energierückgewinnung Drucktauscher in Form von Rohrkammern benutzt werden. Mit deren Hilfe wird der noch hohe Druck des aus dem Membranmodul abfließenden, energiereichen Brine auf eine noch zu reinigende Flüssigkeit übertragen. Somit ist um das Maß dieser Drucksteigerung eine geringere Pumpenantriebsleistung für die einzuspeisende Flüssigkeit erforderlich, um den für das Reverse-Osmose-Verfahren notwendigen hohen Druck zu erzeugen.

Zur Steuerung und/oder Umschaltung der Fluidwege des Brine in und aus den Drucktauschern dient, neben anderen Armaturen, eine Armatur mit einem rotierenden Verschlusselement. Mit dessen Hilfe erfolgt eine wechselweise Beaufschlagung von den Rohrkammern der Drucktauscher mit dem aus den Membranmodulen austretenden Brine. Das rotierende Verschlusselement ist als Walze ausgebildet, in der nach Art eines 3-Wege-Hahnes Verbindungskanäle angeordnet sind. Während der Umschaltvorgänge erfolgt eine vollständige Absperrung aller Strömungswege. Um Druckstöße bei solchen Umschaltvorgängen zu vermeiden, sind innerhalb der Walze Druckausgleichskanäle angeordnet.

In Abhängigkeit von der Betriebsdauer einer Membran nimmt deren Abscheidefähigkeit ab und eine zu reinigende Flüssigkeit muss entsprechend länger innerhalb eines Membranmoduls verweilen. Aus diesem Grunde werden beim Stand der Technik mit Hilfe eines Stellmotors die Umschaltzeiten der Walze beeinflusst. Diese Armatur ist jedoch nur für kleine Reverse-Osmoseanlagen geeignet, da die Durchströmquerschnitte innerhalb der Armatur annähernd gleich groß sind wie die Durchströmquerschnitte der zu befüllenden Kanäle. Bei großen Anlagen und den darin zu verschiebenden Flüssigkeitssäulen sowie den dadurch bedingten Kräfte kommt es zu einem erheblichen Dimensionierungsproblem der Armatur.

Der Erfindung liegt das Problem zugrunde, insbesondere für große Reverse-Osmose und ähnliche Anlagen, eine Umschalteinrichtung zu entwickeln, mit deren Hilfe in einfacher Weise große Flüssigkeitsströme störungsfrei zwischen verschiedenen Drucktauschern verteilt werden können.

Die Lösung dieses Problems sieht vor, dass innerhalb des Gehäuses ein mit mehreren Überströmwegen versehener Strömungsteiler angeordnet ist, dass Mündungen der Überströmwege an zwei axialen Stirnseiten und am Umfang des Strömungsteilers angeordnet sind und dass an jeder Stirnseite des Strömungsteilers ein rotierendes scheibenförmiges Steuerelement dichtend angeordnet ist. Somit kann bei solchen zu steuernden Fluidströmen, die periodisch die Richtung ändern, eine druckstoßarme Umschaltung erreicht werden.

Ausgestaltungen der Erfindung sehen vor, dass innerhalb des Gehäuses die stirnseitigen Bereiche des Strömungsteilers mit den Rohrkammern verbunden sind, in denen mit Hilfe der wechselnden Fluidströme eine Druckaustausch erfolgt. Am Gehäuse der Armatur sind im Umfangsbereich des Strömungsteilers und am Gehäuse je ein Anschluss für eine Zufuhr von Hochdruck-Fluid und einen Abfluss von Niederdruck-Fluid angeordnet. Durch den Anschluss für ein Hochdruck-Fluid strömt beispielsweise von einem Reverse-Osmose Modul ein unter hohem Druck stehendes sogenanntes Brine, auch HPB genannt, der Armatur zu. Nach einer Druckübertragung fließt das Brine, dann als sogenanntes LPB, in entspannter Form durch den Abfluss für Niederdruck-Fluid aus dem Gehäuse ab.

Im Strömungsteiler sind Strömungswege angeordnet, mit deren Hilfe eine Verteilung der unterschiedliche Drücke aufweisenden Strömungen erfolgt. Dabei sind innerhalb des Strömungsteilers zwei äußere Strömungswege mit einer Hochdruckseite verbunden und ein dazwischen angeordneter mittlerer Strömungsweg ist mit einer Niederdruckseite verbunden. Um bei den ständig wechselnden Druckbelastungen eine langfristige Betriebssicherheit zu gewährleisten, können zusätzlich in einem oder mehreren der Strömungswege ein oder mehrere Versteifungselemente angeordnet werden. Dies ist abhängig von der räumlichen Gestaltung des Strömungsteilers und den verwendeten Materialien.

Der Strömungsteiler kann ein integraler Bestandteil des Gehäuses sein, wobei es sich als vorteilhaft gezeigt hat, wenn der Strömungsteiler als ein Gehäuseeinsatz ausgebildet ist. Somit vereinfacht sich eine Gehäusefertigung und die Anzahl der am Gehäuse befindlichen Dichtungsstellen kann reduziert werden. Ebenfalls als vorteilhaft im Hinblick auf das Verschleißverhalten hat sich erwiesen, wenn der Strömungsteiler als ein keramisches oder ein (keramisch) beschichtetes Bauteil ausgebildet ist.

Die Steuerelemente sind in vorteilhafter Weise nach Art rotierender Drehschieber ausgebildet, wodurch sich neben einer einfachen Herstellung auch eine sichere Beherrschung der Abdichtfunktionen möglich ist. Damit wird ein bisher bekanntes Verschlussglied ersetzt durch Steuerelemente, die nur während ihrer Rotationsbewegung als temporäre Verschlussglieder wirken. Die Steuerelemente steuern wechselweise am Strömungsteiler den Durchfluss durch dessen Überströmwege, womit eine sichere und effiziente Strömungsumschaltung gewährleistet ist. Weiterhin sind die Steuerelemente mit einander paarweise gegenüberliegenden Steueröffnungen versehen, womit auf kleinem Raum ein Durchfluss einer größeren Menge erreicht wird.

Mit Hilfe der Ausgestaltung, dass die Steueröffnungen eines Steuerelementes zu den Steueröffnungen des anderen Steuerelementes jeweils um maximal 90° zueinander versetzt angeordnet sind, erfolgt in einfachster Weise während einer Drehbewegung der Steuerelemente eine wechselweise Umschaltung der Strömungsrichtung zu den an das Gehäuse angeschlossenen Rohrkammern.

Da die Steuerelemente im Betrieb einer Wechselbelastung ausgesetzt sind, sind sie auf der dem Strömungsteiler abgewandten Seite mit Verstärkungen versehen. Ebenso ist es möglich, die Steuerelemente an ihrem Umfang mit Verstärkungen zu versehen. Dies können zusätzliche Materialansammlungen, Einbauten, Stützelemente und Spannelemente und dergleichen sein. Dies ist abhängig von den verwendeten Materialien.

Zur Reduzierung der Kräfte zwischen Strömungsteiler und Steuerelement sind an den Stirnseiten des Strömungsteilers ein oder mehrere Vertiefungen zur Bildung schmaler Lagerflächen angeordnet. Diese Maßnahme vermeidet eine ganzflächige Anlage, wodurch höhere Reibungskräfte bedingt sind. Stattdessen ist somit die Ausbildung von-schmalen Anlageflächen möglich, die auch gleichzeitig eine bessere Abdichtung erlauben.

Zur Trennung von den im Gehäuse befindlichen Räumen unterschiedlicher Druckbereiche liegen an den Steuerelementen auf der vom Strömungsteiler abgewandten Seite Dichtungen an. Diese können nach Gleitringdichtungs-Bauart ausgebildet sein. Neben einer leichten Herstellungsmöglichkeit ist damit der Vorteil der bekannt sicheren Dichtungswirkung gegeben. Weiter ist die Welle in einem von den Dichtungen abgeschirmten und mit der Niederdruckseite LPB verbundenen Bereich des Gehäuses angeordnet. In vorteilhafter Weise ist dadurch ein Durchtritt der Welle durch die Gehäusewand nach außen nur noch durch eine für Niederdruck ausgelegte übliche Wellenabdichtung abzudichten. Dies ist mit weniger Aufwand verbunden, als eine solche Wellendurchführung gegenüber der Hochdruckseite HPB abzudichten. Und innerhalb der Armatur sind dadurch für einen Wellendurchtritt keine zusätzlichen Dichtungen erforderlich.

Weitere Ausgestaltungen sehen vor, dass eine die Steuerelemente antreibende Welle den Strömungsteiler durchdringt und dass die Steuerelemente kräfteübertragend mit der Welle verbunden sind. Dies vereinfacht die Lagerung und den Antrieb der Steuerelemente. Die Streuerelemente sind als keramische oder beschichtete Bauteile ausgebildet, wodurch eine hohe Beständigkeit gegen Verschleiß und den Angriff der zu steuernden Fluidströme gegeben ist.

Eine erhebliche Montage- und Wartungserleichterung ergibt sich, wenn Strömungsteiler, Welle und Steuerelemente als ein Gehäuseeinschub ausgebildet sind. Somit kann in kürzester Zeit eine Funktionsfähigkeit gewährleistet werden. Und durch die Anordnung von am Umfang des Strömungsteilers zwischen Zufluss und Abfluss angeordnete Dichtungszonen wird ein Überströmen zwischen diesen beiden Zonen vermieden.

Für eine weiche Umsteuerung ist vorgesehen, dass die Rohrkammern des Druckwandlers während einer Bewegung des Drehschiebers kurzzeitig durch die Lage und Größe der Steueröffnungen untereinander verbunden sind. Die Lage und die Größe der Steueröffnungen auf den als Drehschieber ausgebildeten Steuerelementen ermöglicht eine druckstoßfreie Strömungsumschaltung, weil damit immer eine gleichzeitige Verbindung mit einem Zufluss von Hochdruck-Fluid gewährleistet ist. Ein Schließen einer Steueröffnung von einer angeschlossenen Rohrkammer ist gleichzeitig verbunden mit einem Öffnen einer vorher geschlossenen anderen Steueröffnung einer weiteren Rohrkammer und umgekehrt. Infolge der vergrößerten Steueröffnungen bzw. durch deren Lage auf dem Steuerelement wird eine Überschneidung mit den fest im Strömungsteiler angeordneten Strömungsöffnungen erreicht. Eine solche Überschneidung wirkt sich dabei günstig auf die Umsteuerung und das Verhalten der davon beeinflussten strömenden Flüssigkeitssäulen aus.

In Abhängigkeit von der Durchflussmenge des Druckwandlers wird die Position der Steueröffnungen mit kontinuierlicher und/oder diskontinuierlicher Geschwindigkeit verändert. Damit kann der Füllungsgrad der Rohrkammern beeinflusst werden. Die Verwendung einer diskontinuierlicher Geschwindigkeit ermöglicht unter Ausnutzung des vollen Öffnungsquerschnittes eine längere Verweildauer der Strömungsöffnungen über den Steueröffnungen. Mit der diskontinuierlichen Bewegung wird eine größere Kanalfüllung in kürzerer Zeit erreicht und somit ein Maximum an möglicher Durchflussmenge gewährleistet. Dies kann mit Hilfe eines entsprechend ausgebildeten Antriebsmotors geschehen. Bei Verwendung eines üblichen Drehantriebes mit kontinuierlicher Bewegung der Steuerelemente ist die gleiche Einrichtung auch für kleinere Anlagen verwendbar, da damit eine geringere Durchflussmenge geschaltet wird. Umgekehrt kann mit einer diskontinuierlichen Bewegung der Steuerelemente bei einer gegebenen Durchflussmenge das Bauvolumen der Einrichtung reduziert werden. Mit Hilfe einstellbarer Schaltzeiten der Steuerelemente kann in Abhängigkeit der anstehenden Druckdifferenzen der Mengendurchsatz beeinflusst werden.

Ausgestaltungen der Erfindung sind in den Zeichnungen dargestellt und werden im folgenden näher beschrieben. Es zeigen die
- Fig. 1a & 1 b: zwei um 90° versetzte Schnittansichten der Armatur in einem ersten Betriebszustand, jeweils in der Ebene der Zu- und Abflüsse, die
- Fig. 2a & 2b: zwei um 90° versetzte Schnittansichten der Armatur in einem zweiten Betriebszustand, wobei gegenüber den Fig. 1 a & 1 b die Steuerelemente jeweils um 90° verdreht dargestellt sind, die
- Fig. 3a: eine perspektivische Ansicht des Strömungsteilers, die
- Fig. 3b: eine perspektivische Ansicht des Strömungsteilers, in der ein Viertel des Strömungsteilers weggeschnitten wurde, um die Strömungswege sichtbar zu machen, die
- Fig. 4a: eine perspektivische Ansicht des Strömungsteilers im Verbund mit den beiden Steuerelementen in einem ersten Betriebszustand, wobei der obere Teil weggeschnitten wurde, um die Strömungsrichtung zu verdeutlichen, die
- Fig. 4b: eine perspektivische Ansicht des Strömungsteilers im Verbund mit den beiden Steuerelementen in einem zweiten Betriebszustand, wobei gegenüber der Fig. 4a die Steuerelemente jeweils um 90° verdreht dargestellt sind.

In der Fig. 1a ist im Schnitt eine Armatur 1 gezeigt. Das Gehäuse 2 besitzt zwei Anschlüsse 3, 4 mit deren Hilfe eine Verbindung zu nicht dargestellten Rohrkammern von einem Drucktauschersystem erfolgt. Durch die Anschlüsse 3, 4 erfolgt wechselweise ein Austausch von einem Fluid, welches unter hohem Druck hindurchströmt und mit niedrigerem Druck zurückströmt. Pfeile 5, 6 zeigen die jeweils herrschenden Strömungsrichtungen an. Der Abstand zwischen den Anschlüssen 3, 4 wird entsprechend dem Abstand zwischen daran anzuschließenden Rohrkammern gewählt. Diese Integration der Anschlüsse 3, 4 in das Gehäuse 2 vermeidet unnötige zusätzliche Dichtungsstellen.

Innerhalb des Gehäuses 2 ist ein Strömungsteiler 7 angeordnet, der in dem gezeigten Ausführungsbeispiel als separater Einsatz gestaltet ist. Er kann genauso gut mit dem Gehäuse 2 als ein einteiliges Bauteil gestaltet sein. Der hier als Einsatz ausgebildete Strömungsteiler 7 ist mit Hilfe von Dichtungen 8 gegenüber dem Gehäuse 2 abgedichtet. Im Bereich des Umfanges vom Strömungsteiler 7 ist ein Raum 9 angeordnet, der zur Abfuhr eines entspannten Fluids dient. An den Stirnseiten 10, 11 liegt jeweils ein Steuerelement 12, 13 dichtend an und wird mit Hilfe einer von einem nicht dargestellten Motor angetriebenen Welle 14 in Rotation versetzt. Die Kräfteübertragung zwischen Welle 14 und den Steuerelementen 12, 13 erfolgt durch Lagerelemente 15. Diese können als Polygone, Vielecke oder in sonstiger Weise kraft- und formschlüssig gestaltet sein. Die Welle 14 ist im inneren des Gehäuses 2 an einem Ende gelagert und auf der gegenüberliegenden Seite in einem das Gehäuse 2 verschließenden Deckel 16 gelagert und abgedichtet.

Die rotierende Steuerelemente 12, 13, die hier nach Art von Drehschiebern gestaltet sind, weisen Verstärkungen 12.1 bis 13.2 auf. Diese Verstärkungen verbessern die wechselnde Biegebelastung der Steuerelemente 12, 13 beim Umschaltvorgang. Je nach verwendeten Materialien, also Metall oder Keramik oder Kombinationen davon, können diese Verstärkungen in Form von Materialanhäufungen, Platten, Ringen, Streben oder dergleichen ausgebildet sein.

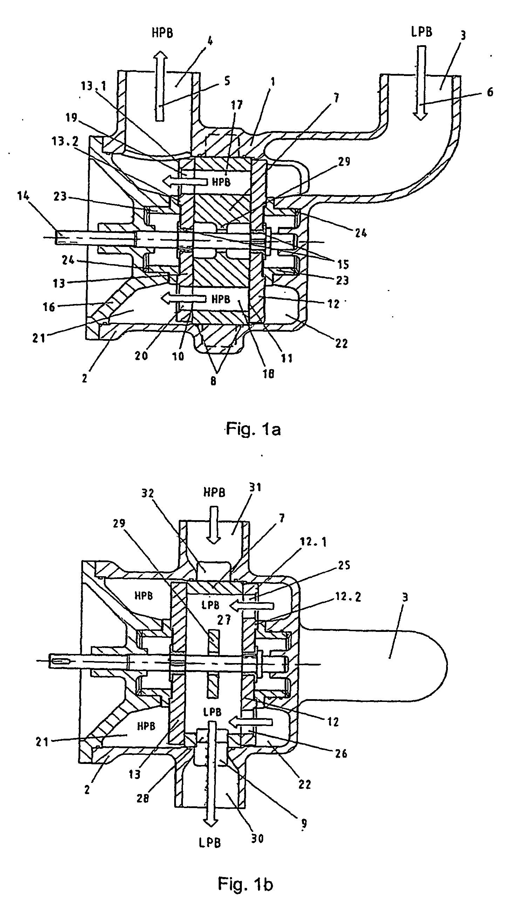

In der Darstellung der Fig. 1 strömt ein unter hohem Druck befindliches Fluid, beispielsweise ein Hochdruckbrine HPB aus zwei T-förmigen Strömungswegen 17, 18 durch paarweise einander gegenüberliegenden Steueröffnungen 19, 20 des Steuerelementes 13 in einen stirnseitigen Bereich 21 des Gehäuses 2 und von dort über den Anschluss 4 zu einer Rohrkammer. Im gleichen Zeitpunkt strömt durch den Anschluss 3 von einer Rohrkammer ein unter einem niedrigen Druck stehendes Fluid, beispielsweise ein Niederdruckbrine LPB, in den stirnseitigen Bereich 22 des Gehäuses 2.

An jedem Steuerelement 12, 13 anliegende Dichtungen 23 verhindern einen Flüssigkeitsaustausch mit anderen Gehäusebereichen. Die Dichtungen 23 sind nach Art einer Gleitringdichtung ausgebildet, im Gehäuse 2 verdrehgesichert gehalten und liegen unter dem Druck von Federn 24 dichtend an den Steuerelementen 12,13 an.

Die Fig. 1 b entspricht von der momentanen Stellung der Steuerelemente in Relation zu dem Strömungsteiler dem Ausführungsbeispiel der Fig. 1a. Jedoch ist in der Fig. 1 b ein um 90° gedrehter Schnitt gezeigt. Darin ist erkennbar, dass von dem Steuerelement 12 die paarweise angeordneten Steueröffnungen 25, 26 in flüssigkeitsführender Verbindung mit einem Strömungsweg 27 stehen, der in der Mitte des Strömungsteilers 7 angeordnet ist. Der für einen Abfluss eines mit LPB gekennzeichneten Niederdruck-Fluid ausgelegte mittlere Strömungsweg 27 ist zwischen den beiden für ein Hochdruck-Fluid HPB ausgelegten Strömungswegen 17, 18 angeordnet. Zur sicheren Beherrschung der alternierend auftretenden Kräfte ist im Strömungsweg 27 ein Versteifungselement 29 nach Art einer Querrippe angeordnet. Diese sorgt für einen günstigen Kraftfluss innerhalb des Strömungsteilers 7.

Ein durch den Anschluss 3 in das Gehäuse 2 geleitetes Niederdruck-Fluid strömt über die Steueröffnung 25, 26 in den Strömungsweg 27 und fließt von dort über eine Öffnung 28 im Strömungsteiler 7 und einen Abfluss 30 als Niederdruck-Fluid aus dem Gehäuse ab. Dem Abfluss 30 am Gehäuse 2 gegenüberliegend angeordnet ist ein Anschluss 31 für die Zufuhr von Hochdruck-Fluid HPB zum Gehäuse 2. Mit Hilfe des am Umfang vom Strömungsteiler 7 angeordneten Raum 32 wird das Hochdruck-Fluid zu den beiden T-förmigen Strömungswegen 17 und 18 geleitet. Mit Hilfe des gegenüberliegend angeordneten Niederdruckraumes 9 erfolgt über den Abfluss 30 die Abfuhr von Niederdruck-Fluid aus dem Gehäuse 2.

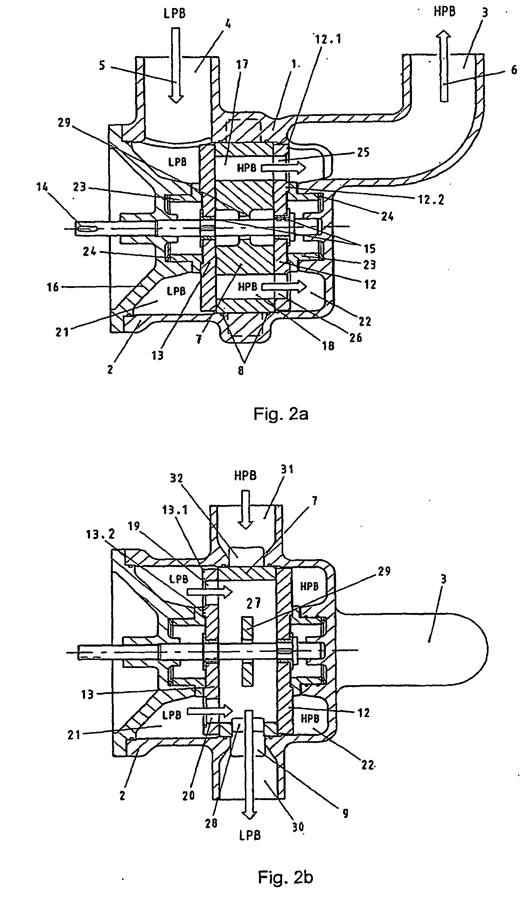

Fig. 2a und 2b zeigen die selben Schnitte durch die Armatur wie Fig. 1a und 1b, jedoch in einem zweiten Betriebszustand. Hierbei wurden über die Welle 14 und die Lagerelemente 15 die Steuerelemente 12 und 13 um jeweils 90° weitergedreht. Das durch den Hochdruck- Anschluss 31 und den Raum 32 in die Strömungswege 17, 18 einströmende Fluid HPB wird nun über die Steueröffnungen 25, 26 in den Raum 22 gelenkt, von wo es über den Anschluss 3 zu einer (-nicht dargestellten-) Rohrkammer gelangt. Zur gleichen Zeit strömt Niederdruck-Fluid LPB über den Anschluss 4 von einer zweiten Rohrkammer in den Raum 21, durch die Steueröffnungen 19, 20 in den mittleren Strömungsweg 27 im Strömungsteiler 7 und von dort über die Öffnung 28, den Raum 9 und den Anschluss 30 aus der Armatur. Durch weiteres Drehen der Teile 12, 13, 14, und 15 um 90° wird dann wieder der erste, in Fig. 1a und 1b dargestellte Betriebszustand erreicht.

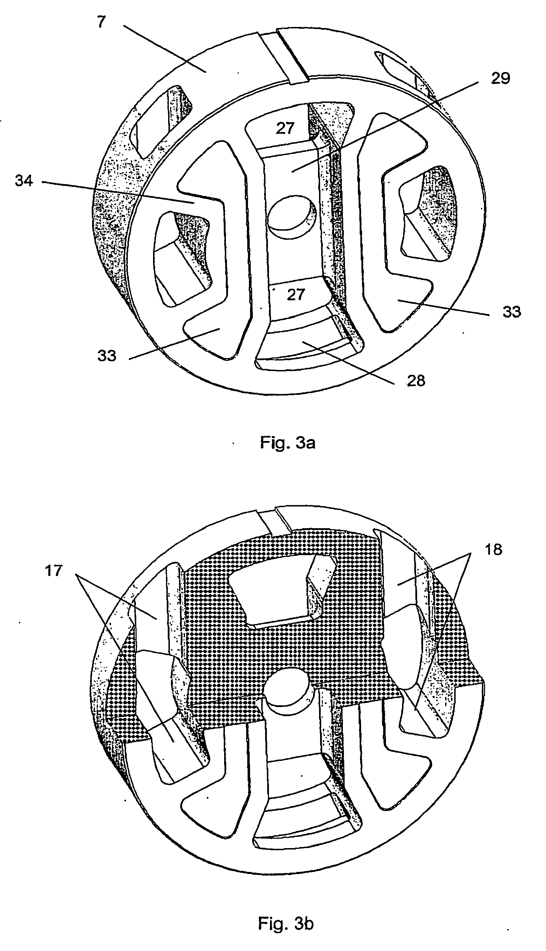

Die Fig. 3a zeigt eine perspektivische Ansicht des Strömungsteilers 7 mit einem mittleren Strömungsweg 27 und Fig. 3b zeigt durch einen Teilschnitt im Strömungsteiler 7 die Lage der darin noch befindlichen äußeren Strömungswege 17 und 18. Im mittleren Strömungsweg 27 ist ein Versteifungselement 29 vorhanden, in dem sich eine Öffnung für die Durchführung der Welle 14 befindet. Weiterhin sind an der Stirnseite 11 des Strömungsteilers 7 mehrere Vertiefungen 33 angebracht, wodurch auf der Stirnfläche 11 schmale Lagerflächen 34 gebildet werden. Dies reduziert die Reibungskräfte zwischen den aufeinander gleitenden Teilen und verbessert gleichzeitig die Dichtwirkung. Durch die im Verlauf T-förmigen Strömungswege 17, 18 ist in einfachster Weise gewährleistet, dass durch die abwechselnd daran vorbei gleitenden Steueröffnungen 19, 20; 25,26 ein alternierender Abfluss eines Hochdruck-Fluids in die jeweils angeschlossene Rohrkammer möglich wird. Durch eine Öffnung 28 fließt ein Fluid aus dem mittleren Strömungsweg 27 nach außen über den Abfluss 30 aus dem Gehäuse 2 ab.

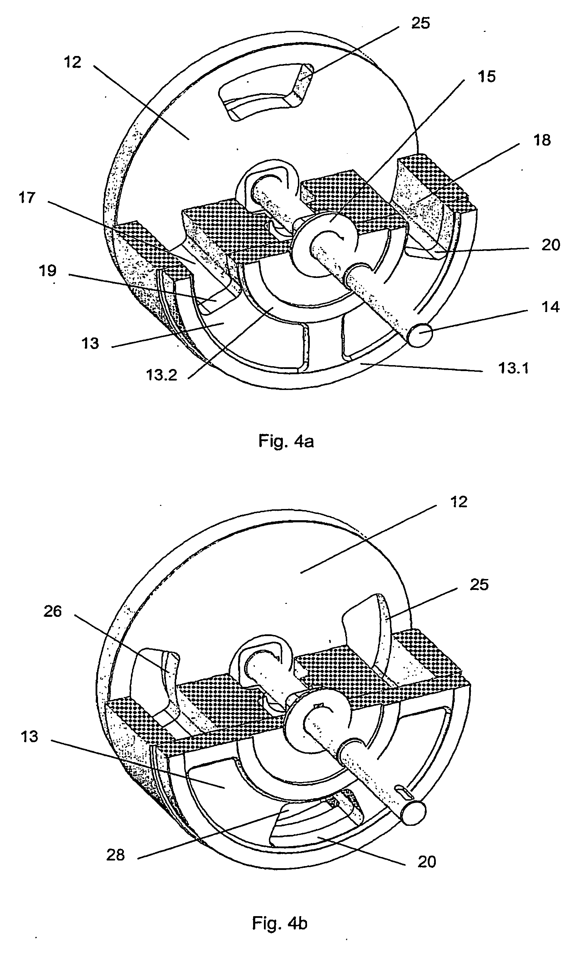

Die Fig. 4a und 4b zeigen eine perspektivische Anordnung der Funktionsteile in Form des Strömungsteilers 7, der Steuerelemente 12, 13, der Welle 14 und der Lagerelemente 15 von der Armatur 1 jeweils im Teilschnitt. Fig. 4a zeigt dabei den ersten Betriebszustand und Fig. 4b den zweiten Betriebszustand mit den gegenüber dem Strömungsteiler 7 jeweils um 90° verdrehten Teilen 12, 13, 14, und 15. In Fig. 4a wird deutlich, wie in einem ersten Betriebszustand das Hochdruck-Fluid HPB durch die Strömungswege 17, 18 und die Steueröffnungen 19, 20 zu der in dieser Ansicht vorderen Seite strömt. Gleichzeitig ist dabei auf der anderen oder hier der Rückseite über die paarweise angeordneten Strömungsöffnungen 25, 26, wobei letztere verdeckt ist, der Weg über den mittleren Strömungsweg 27 zur Öffnung 28 frei.

In dem in Fig. 4b gezeigten zweiten Betriebszustand sind die Verhältnisse im umgekehrten Zustand dargestellt. Dazu wurden sind die Steuerelemente 12, 13 mit Hilfe der Welle 14 und den Lagerelemente 15 gegenüber dem Strömungsteiler 7 um 90° verdreht gezeichnet. In dieser Ansicht der Zeichnung fließt ein Hochdruck-Fluid HPB über die Strömungsöffnungen 25, 26 des Steuerelementes 12 nach hinten ab. Gleichzeitig gelangt von der Vorderseite der Zeichnungsansicht über die ebenfalls paarweise angeordneten Strömungsöffnungen 19, 20 (19 ist durch die Teilschnittdarstellung weggeschnitten) ein entspanntes Niederdruck-Fluid LPB in den mittleren Strömungsweg 27 und fließt von dort über die Öffnung 28 aus der Armatur ab.

Durch diese Lösung mit den beiderseits eines Strömungsteilers 7 angeordneten Steuerelementen 12, 13 wird eine äußerst kompakte Umschaltarmatur mit hoher Betriebssicherheit geschaffen. Gleichzeitig konnte für eine solche Armatur die Anzahl der notwendigen Dichtungsstellen und Rohrleitungsanschlüsse auf ein Minimum reduziert werden.

## Patentansprüche

1. Armatur (1) zur Umschaltung von Fluidwegen, insbesondere für Anlagen mit Drucktauschern mit wechselweise durchströmten Rohrkammern, wobei innerhalb eines Gehäuses (2) der Armatur ein drehbares Verschlusselement angeordnet ist, das Gehäuse (2) mehrere Anschlüsse (3, 4) für Verbindungsleitungen aufweist, das Gehäuse (2) mit einem ersten Rohrleitungssystem und mit jeweils einer Endseite von mindestens einem Drucktauscher verbunden ist, wobei eine jeweils andere Endseite eines Drucktauschers unter Zwischenschaltung weiterer Armaturen mit einem zweiten Rohrleitungssystem verbunden ist, und das Verschlusselement mit einer motorbetriebenen Antriebswelle (14) versehen ist, **dadurch gekennzeichnet, dass** innerhalb des Gehäuses (2) ein mit mehreren Überströmwegen (17, 18, 27) versehener Strömungsteiler (7) angeordnet ist, dass Mündungen der Überströmwege (17, 18, 27) an zwei axialen Stirnseiten (10, 11) und am Umfang des Strömungsteilers (7) angeordnet sind und dass an jeder Stirnseite des Strömungsteilers (7) ein rotierendes scheibenförmiges Steuerelement (12, 13) dichtend angeordnet ist.

2. Armatur nach Anspruch 1, **dadurch gekennzeichnet, dass** die stirnseitigen Bereiche (10, 11) des Strömungsteilers (7) mit den Rohrkammern verbunden sind.

3. Armatur nach Anspruch 1 oder 2, **dadurch gekennzeichnet, dass** am Gehäuse (2) im Umfangsbereich des Strömungsteilers (7) je ein Anschluss für eine Zufuhr (31) von Hochdruck-Fluid (HPB) und einen Abfluss (30) von Niederdruck-Fluid (LPB) angeordnet sind.

4. Armatur nach Anspruch 1, 2 oder 3, **dadurch gekennzeichnet, dass** im Strömungsteiler (7) mindestens drei Strömungswege (17, 18, 27) angeordnet sind.

5. Armatur nach Anspruch 4, **dadurch gekennzeichnet, dass** innerhalb des Strömungsteilers (7) mindestens zwei äußere Strömungswege (17, 18) mit einer Hochdruckseite (HPB) verbunden sind und mindestens ein dazwischen angeordneter mittlerer Strömungsweg (27) mit einer Niederdruckseite (LPB) verbunden ist.

6. Armatur nach Anspruch 4 oder 5, **dadurch gekennzeichnet, dass** in einem oder mehreren der Strömungswege (17, 18, 27) ein oder mehrere Versteifungselemente (29) angeordnet sind.

7. Armatur nach Anspruch 4, 5 oder 6, **dadurch gekennzeichnet, dass** äußere Strömungswege (17, 18) einen T-förmigen Verlauf aufweisen.

8. Armatur nach einem der Ansprüche 1 bis 7, **dadurch gekennzeichnet, dass** der Strömungsteiler (7) als ein Gehäuseeinsatz ausgebildet ist.

9. Armatur nach Anspruch 8, **dadurch gekennzeichnet, dass** der Strömungsteiler (7) als ein dichtend angeordneter, auswechselbarer Einsatz ausgebildet ist.

10. Armatur einem der Ansprüche 1 bis 9, **dadurch gekennzeichnet, dass** der Strömungsteiler (7) als ein keramisches oder ein beschichtetes Bauteil ausgebildet ist.

11. Armatur nach einem der Ansprüche 1 bis 10, **dadurch gekennzeichnet, dass** die Steuerelemente (12, 13) als Drehschieber ausgebildet sind.

12. Armatur nach einem der Ansprüche 1 bis 11, **dadurch gekennzeichnet, dass** die Steuerelemente (12, 13) mit einander paarweise gegenüberliegenden Steueröffnungen (19, 20; 25, 26) versehen sind.

13. Armatur nach Anspruch 12, **dadurch gekennzeichnet, dass** die Steueröffnungen (19, 20) eines Steuerelementes (13) zu den Steueröffnungen (25, 26) des anderen Steuerelementes (12) jeweils um maximal 90° zueinander versetzt angeordnet sind.

14. Armatur nach einem der Ansprüche 11, 12, oder 13, **dadurch gekennzeichnet, dass** die Steuerelemente (12, 13) auf der dem Strömungsteiler (7) abgewandten Seite mit Verstärkungen (12.1, 12.2, 13.1, 13.2) versehen sind.

15. Armatur nach einem der Ansprüche 11 bis 14, **dadurch gekennzeichnet, dass** die Steuerelemente (12, 13) am Umfang mit Verstärkungen versehen sind.

16. Armatur nach einem der Ansprüche 1 bis 15, **dadurch gekennzeichnet, dass** an den Stirnseiten (10, 11) des Strömungsteilers (7) ein oder mehrere Vertiefungen (33) zur Bildung schmaler Lagerflächen (34) angeordnet sind.

17. Armatur nach einem der Ansprüche 1 bis 16, **dadurch gekennzeichnet, dass** die Steuerelemente (12, 13) auf der vom Strömungsteiler (7) abgewandten Seite an Dichtungen (23) anliegen.

18. Armatur nach Anspruch 17, **dadurch gekennzeichnet, dass** die Dichtungen (23) nach Gleitringdichtungs-Bauart ausgebildet sind.

19. Armatur nach Anspruch 17 oder 18, **dadurch gekennzeichnet, dass** die Welle (14) in einem von den Dichtungen (23) abgeschirmten und mit der Niederdruckseite (LPB) verbundenen Bereich des Gehäuses angeordnet ist.

20. Armatur nach Anspruch 17, 18 oder 19, **dadurch gekennzeichnet, dass** die Dichtungen (23) unter dem Druck von Federn (24) dichtend an den Steuerelementen (12, 13) anliegen.

21. Armatur nach einem der Ansprüche 1 bis 20, **dadurch gekennzeichnet, dass** eine die Steuerelemente (12, 13) antreibende Welle (14) den Strömungsteiler (7) durchdringt.

22. Armatur nach einem der Ansprüche 1 bis 21, **dadurch gekennzeichnet, dass** die Steuerelemente (12, 13) kräfteübertragend mit der Welle (14) verbunden sind.

23. Armatur einem der Ansprüche 1 bis 22, **dadurch gekennzeichnet, dass** die Streuerelemente (12, 13) als keramische oder beschichtete Bauteile ausgebildet sind.

24. Armatur nach einem der Ansprüche 1 bis 23, **dadurch gekennzeichnet, dass** Strömungsteiler (7), Welle (14) und Steuerelemente (12, 13) als ein Gehäuseeinschub ausgebildet sind.

25. Armatur nach den Ansprüchen 3, 8 oder 24, **dadurch gekennzeichnet, dass** am Umfang des Strömungsteilers (7) zwischen Zufluss (31) und Abfluss (30) Dichtungszonen angeordnet sind.

26. Armatur nach einem oder mehreren der Ansprüche 1 bis 25, dass die Rohrkammern des Druckwandlers während einer Bewegung der Steuerelement (12, 13) kurzzeitig durch die Lage und Größe der Steueröffnungen (19, 20; 25, 26) über den Strömungsteiler (7) untereinander verbunden sind.

27. Armatur nach Anspruch 26, **dadurch gekennzeichnet, dass** Lage und Größe der Steueröffnungen (19, 20; 25, 26) eine druckstoßfreie Strömungsumschaltung ermöglichen.

28. Armatur nach Anspruch 26 oder 27, **dadurch gekennzeichnet, dass** ein Schließenvon Steueröffnungen (19, 20; 25, 26) einer Rohrkammer gleichzeitig verbunden ist mit einem Öffnen von vorher geschlossenen Steueröffnungen (19, 20; 25, 26) einer anderen Rohrkammer und umgekehrt.

29. Armatur nach einem oder mehreren der Ansprüche 1 bis 28, **dadurch gekennzeichnet, dass** in Abhängigkeit von der Durchflussmenge des Druckwandlers die Position der Steueröffnungen (19, 20; 25, 26) mit kontinuierlicher und/oder diskontinuierlicher Geschwindigkeit verändert wird.

## Claims

1. Fitting (1) for changing fluid paths, in particular for installations comprising pressure exchangers with tubular chambers through which flow takes place alternately, a rotatable closing element being arranged inside a housing (2), the housing (2) of the fitting having a plurality of connections (3, 4) for connecting lines, the housing (2) being connected to a first pipeline system and in each case one end of at least one pressure exchanger, a respective other end of a pressure exchanger being connected to a second pipeline system with the interposition of further fittings, and the closing element being provided with a motor-operated drive shaft (14), **characterized in that** a flow splitter (7) provided with a plurality of transfer paths (17, 18, 27) is arranged within the housing (2), **in that** openings of the transfer paths (17, 18, 27) are arranged at two axial ends (10, 11) and on the circumference of the flow splitter (7), and **in that** a rotating, disc-like control element (12, 13) is arranged in a sealing manner at each end of the flow splitter (7).

2. Fitting according to Claim 1, **characterized in that** the end regions (10, 11) of the flow splitter (7) are connected to the tubular chambers.

3. Fitting according to Claim 1 or 2, **characterized in that** in each case a connection for a supply (31) of high pressure fluid (HPB) and a discharge (30) of low pressure fluid (LPB) are arranged on the housing (2), in the circumferential region of the flow splitter (7).

4. Fitting according to Claim 1, 2 or 3, **characterized in that** at least three flow paths (17, 18, 27) are arranged in the flow splitter (7).

5. Fitting according to Claim 4, **characterized in that**, within the flow splitter (7), at least two outer flow paths (17, 18) are connected to a high pressure side (HPB) and at least one central flow path (27), arranged between the former, is connected to a low pressure side (LPB).

6. Fitting according to Claim 4 or 5, **characterized in that** one or more reinforcing elements (29) are arranged in one or more of the flow paths (17, 18, 27).

7. Fitting according to Claim 4, 5 or 6, **characterized in that** outer flow paths (17, 18) have a T-shaped course.

8. Fitting according to one of Claims 1 to 7, **characterized in that** the flow splitter (7) is constructed as a housing insert.

9. Fitting according to Claim 8, **characterized in that** the flow splitter (7) is constructed as an interchangeable insert arranged in a sealing manner.

10. Fitting according to one of Claims 1 to 9, **characterized in that** the flow splitter (7) is constructed as a ceramic or a coated component.

11. Fitting according to one of Claims 1 to 10, **characterized in that** the control elements (12, 13) are constructed as rotary slides.

12. Fitting according to one of Claims 1 to 11, **characterized in that** the control elements (12, 13) are provided with control openings (19, 20; 25, 26) located opposite one another in pairs.

13. Fitting according to Claim 12, **characterized in that** the control openings (19, 20) of a control element (13) are arranged to be offset by at most 90° from one another in each case in relation to the control openings (25, 26) of the other control element (12).

14. Fitting according to one of Claims 11, 12 or 13, **characterized in that** the control elements (12, 13) are provided with reinforcements (12.1, 12.2, 13.1, 13.2) on the side facing away from the flow splitter (7).

15. Fitting according to one of Claims 11 to 14, **characterized in that** the control elements (12, 13) are provided with reinforcements on the circumference.

16. Fitting according to one of Claims 1 to 15, **characterized in that** one or more depressions (33) are arranged on the ends (10, 11) of the flow splitter (7) in order to form narrow bearing surfaces (34).

17. Fitting according to one of Claims 1 to 16, **characterized in that** the control elements (12, 13) bear on seals (23) on the side facing away from the flow splitter (7).

18. Fitting according to Claim 17, **characterized in that** the seals (23) are of a sliding ring seal design.

19. Fitting according to Claim 17 or 18, **characterized in that** the shaft (14) is arranged in a region of the housing which is shielded by the seals (23) and is connected to the low pressure side (LPB).

20. Fitting according to Claim 17, 18 or 19, **characterized in that** the seals (23) bear in a sealing manner on the control elements (12, 13) under the pressure of springs (24).

21. Fitting according to one of Claims 1 to 20, **characterized in that** a shaft (14) driving the control elements (12, 13) passes through the flow splitter (7).

22. Fitting according to one of Claims 1 to 21, **characterized in that** the control elements (12, 13) are connected to the shaft (14) in a forcetransmitting manner.

23. Fitting according to one of Claims 1 to 22, **characterized in that** the control elements (12, 13) are constructed as ceramic or coated components.

24. Fitting according to one of Claims 1 to 23, **characterized in that** flow splitter (7), shaft (14) and control elements (12, 13) are constructed as a housing insert.

25. Fitting according to Claims 3, 8 or 24, **characterized in that** sealing zones are arranged on the circumference of the flow splitter (7), between inlet (31) and outlet (30).

26. Fitting according to one or more of Claims 1 to 25, **characterized in that** the tubular chambers of the pressure converter are connected to one another briefly via the flow splitter (7) by the position and the size of the control openings (19, 20; 25, 26) during a movement of the control element (12, 13).

27. Fitting according to Claim 26, **characterized in that** the position and size of the control openings (19, 20; 25, 26) permit a flow changeover which is free of pressure surges.

28. Fitting according to Claim 26 or 27, **characterized in that** closing control openings (19, 20; 25, 26) of a tubular chamber is at the same time connected with opening previously closed control openings (19, 20; 25, 26) of another tubular chamber and vice versa.

29. Fitting according to one of Claims 1 to 28, **characterized in that**, depending on the flow rate of the pressure converter, the position of the control openings (19, 20; 25, 26) is changed at a continuous and/or discontinuous speed.

## Revendications

1. Robinetterie (1) pour l'inversion des voies fluidiques, notamment pour installations avec échangeurs de pression avec des chambres tubulaires parcourues en alternance, un élément de fermeture rotatif étant disposé à l'intérieur d'un boîtier (2) de la robinetterie, le boîtier (2) présentant plusieurs raccords (3, 4) pour des conduites de connexion, le boîtier (2) étant connecté à un premier système de conduite tubulaire et à un côté d'extrémité respectif d'au moins un échangeur de pression, un autre côté d'extrémité respectif d'un échangeur de pression étant connecté à un deuxième système de conduite tubulaire en intercalant d'autres robinetteries, et l'élément de fermeture étant pourvu d'un arbre d'entraînement (14) entraîné par un moteur, **caractérisée en ce qu'**un diviseur d'écoulement (7) pourvu de plusieurs voies de débordement (17, 18, 27) est disposé à l'intérieur du boîtier (2), **en ce que** des embouchures des voies de débordement (17, 18, 27) sont disposées au niveau de deux côtés frontaux axiaux (10, 11) et sur la périphérie du diviseur d'écoulement (7) et **en ce qu'**un élément de commande rotatif en forme de disque (12, 13) est disposé de manière hermétique de chaque côté frontal du diviseur d'écoulement (7) .

2. Robinetterie selon la revendication 1, **caractérisée en ce que** les régions (10, 11) du côté frontal du diviseur d'écoulement (7) sont connectées aux chambres tubulaires.

3. Robinetterie selon la revendication 1 ou 2, **caractérisée en ce qu'**un raccord respectif pour une alimentation (31) en fluide haute pression (HPB) et une évacuation (30) de fluide basse pression (LPB) sont disposés à chaque fois sur le boîtier (2) dans la région périphérique du diviseur d'écoulement (7).

4. Robinetterie selon la revendication 1, 2 ou 3, **caractérisée en ce qu'**au moins trois voies d'écoulement (17, 18, 27) sont disposées dans le diviseur d'écoulement (7).

5. Robinetterie selon la revendication 4, **caractérisée en ce qu'**au moins deux voies d'écoulement extérieures (17, 18) sont connectées à l'intérieur du diviseur d'écoulement (7) à un côté haute pression (HPB) et qu'au moins une voie d'écoulement centrale (27) disposée entre elles est connectée à un côté basse pression (LPB).

6. Robinetterie selon la revendication 4 ou 5, **caractérisée en ce qu'**un ou plusieurs éléments de rigidification (29) sont disposés dans l'une ou dans plusieurs des voies d'écoulement (17, 18, 27).

7. Robinetterie selon la revendication 4, 5 ou 6, **caractérisée en ce que** des voies d'écoulement extérieures (17, 18) présentent une allure en forme de T.

8. Robinetterie selon l'une quelconque des revendications 1 à 7, **caractérisée en ce que** le diviseur d'écoulement (7) est réalisé sous la forme d'un insert de boîtier.

9. Robinetterie selon la revendication 8, **caractérisée en ce que** le diviseur d'écoulement (7) est réalisé sous la forme d'un insert remplaçable disposé de manière hermétique.

10. Robinetterie selon l'une quelconque des revendications 1 à 9, **caractérisée en ce que** le diviseur d'écoulement (7) est réalisé sous la forme d'un composant en céramique ou d'un composant revêtu.

11. Robinetterie selon l'une quelconque des revendications 1 à 10, **caractérisée en ce que** les éléments de commande (12, 13) sont réalisés sous forme de tiroirs rotatifs.

12. Robinetterie selon l'une quelconque des revendications 1 à 11, **caractérisée en ce que** les éléments de commande (12, 13) sont pourvus d'ouvertures de commande (19, 20 ; 25, 26) opposées les unes aux autres par paires.

13. Robinetterie selon la revendication 12, **caractérisée en ce que** les ouvertures de commande (19, 20) d'un élément de commande (13) sont disposées de manière décalées de 90° au maximum par rapport aux ouvertures de commande (25, 26) de l'autre élément de commande (12).

14. Robinetterie selon l'une quelconque des revendications 11, 12 ou 13, **caractérisée en ce que** les éléments de commande (12, 13) sont pourvus du côté opposé au diviseur d'écoulement (7) de renforcements (12.1, 12.2, 13.1, 13.2).

15. Robinetterie selon l'une quelconque des revendications 11 à 14, **caractérisée en ce que** les éléments de commande (12, 13) sont pourvus de renforcements sur la périphérie.

16. Robinetterie selon l'une quelconque des revendications 1 à 15, **caractérisée en ce qu'**un ou plusieurs renfoncements (33) pour former des surfaces de support étroites (34) sont disposés sur les côtés frontaux (10, 11) du diviseur d'écoulement (7).

17. Robinetterie selon l'une quelconque des revendications 1 à 16, **caractérisée en ce que** les éléments de commande (12, 13) s'appliquent du côté opposé au diviseur d'écoulement (7) contre des joints d'étanchéité (23).

18. Robinetterie selon la revendication 17, **caractérisée en ce que** les joints d'étanchéité (23) sont réalisés suivant une construction de type garniture mécanique d'étanchéité.

19. Robinetterie selon la revendication 17 ou 18, **caractérisée en ce que** l'arbre (14) est disposé dans une région du boîtier protégée par les joints d'étanchéité (23) et connectée au côté basse pression (LPB).

20. Robinetterie selon la revendication 17, 18 ou 19, **caractérisée en ce que** les joints d'étanchéité (23) s'appliquent hermétiquement contre les éléments de commande (12, 13) sous l'effet de la pression de ressorts (24).

21. Robinetterie selon l'une quelconque des revendications 1 à 20, **caractérisée en ce qu'**un arbre (14) entraînant les éléments de commande (12, 13) traverse le diviseur d'écoulement (7).

22. Robinetterie selon l'une quelconque des revendications 1 à 21, **caractérisée en ce que** les éléments de commande (12, 13) sont connectés à l'arbre (14) par transmission de force.

23. Robinetterie selon l'une quelconque des revendications 1 à 22, **caractérisée en ce que** les éléments de commande (12, 13) sont réalisés sous forme de composants en céramique ou de composants revêtus.

24. Robinetterie selon l'une quelconque des revendications 1 à 23, **caractérisée en ce que** le diviseur d'écoulement (7), l'arbre (14) et les éléments de commande (12, 13) sont réalisés sous forme d'insert de boîtier.

25. Robinetterie selon l'une quelconque des revendications 3, 8 ou 24, **caractérisée en ce que** des zones d'étanchéité sont prévues sur la périphérie du diviseur d'écoulement (7) entre l'afflux (31) et l'évacuation (30).

26. Robinetterie selon l'une quelconque ou plusieurs des revendications 1 à 25, **caractérisée en ce que** les chambres tubulaires du convertisseur de pression sont brièvement connectées les unes aux autres par le biais du diviseur d'écoulement (7) pendant un déplacement des éléments de commande (12, 13) par la position et la taille des ouvertures de commande (19, 20 ; 25, 26).

27. Robinetterie selon la revendication 26, **caractérisée en ce que** la position et la taille des ouvertures de commande (19, 20 ; 25, 26) permettent une inversion de l'écoulement sans choc de pression.

28. Robinetterie selon la revendication 26 ou 27, **caractérisée en ce qu'**une fermeture des ouvertures de commande (19, 20 ; 25, 26) d'une chambre tubulaire est simultanément associée à une ouverture d'ouvertures de commande préalablement fermées (19, 20 ; 25, 26) d'une autre chambre tubulaire et inversement.

29. Robinetterie selon l'une quelconque ou plusieurs des revendications 1 à 28, **caractérisée en ce qu'**en fonction du débit traversant le convertisseur de pression, la position des ouvertures de commande (19, 20 ; 25, 26) est modifiée avec une vitesse continue et/ou discontinue.
